# EUROPÄISCHE PATENTANMELDUNG

(11) **EP 3 343 177 A1**
(43) Veröffentlichungstag der Anmeldung: **04.07.2018**
(21) Anmeldenummer: 16206957.9
(22) Anmeldetag: 27.12.2016
(51) Int. Cl.: G01C 21/36, G02B 27/01

(54) **FAHRERASSISTENZSYSTEM, COMPUTERPROGRAMMPRODUKT, SIGNALFOLGE, FORTBEWEGUNGSMITTEL UND VERFAHREN ZUR INFORMATION EINES ANWENDERS EINES FORTBEWEGUNGSMITTELS**

(71) Anmelder: VOLKSWAGEN AKTIENGESELLSCHAFT, 38440 Wolfsburg (DE)
(72) Erfinder: KASSNER, Astrid, 101147 Berlin (DE); CULLMANN, Jacqueline, 38144 Braunschweig (DE); KÖTTER, Nils, 38118 Braunschweig (DE)

(57) **Zusammenfassung**

Es werden ein Fahrerassistenzsystem (13), ein Computerprogrammprodukt, eine Signalfolge, ein Fortbewegungsmittel (10) sowie ein Verfahren zur Information eines Anwenders (1) eines Fortbewegungsmittels (10) vorgeschlagen. Das Verfahren umfasst die Schritte:
- Ermitteln eines Einfahrens in einen Bereich mit einer vorgeschriebenen Verkehrsregelung und
- Ausgeben eines bezüglich der Straßenoberfläche kontaktanalogen Hinweises (3) auf die Verkehrsregelung an den Anwender mittels einer Anzeigeeinrichtung des Fortbewegungsmittels (10).

## Beschreibung

Die vorliegende Erfindung betrifft ein Fahrerassistenzsystem, ein Computerprogrammprodukt, eine Signalfolge, ein Fortbewegungsmittel und ein Verfahren zur Information eines Anwenders eines Fortbewegungsmittels. Insbesondere betrifft die vorliegende Erfindung eine intuitiv erfassbare Information eines Anwenders über eine sich auf einen vorausliegenden Bereich erstreckende Verkehrsregelung.

Klassische Head-Up-Displays zeigen für die Fahrt relevante Inhalte wie z. B. Geschwindigkeitszeichen meist statisch an einer fixen Displayposition an. Wird ein Straßenabschnitt mit einem neuen Verkehrszeichen erreicht, so wird dieses an der dafür vorgesehenen Displayposition eingeblendet. Die Einblendung kann beispielsweise erst dann erfolgen, wenn der Straßenabschnitt erreicht wird. Die mit der Einblendung verbundene geringe Veränderung der Anzeige kann dazu führen, dass der Fahrer die neue Geschwindigkeitsregelung nicht wahrnimmt bzw. nicht beachtet. Außerdem wird kein Bezug zum realen Verkehrsschild in der Umgebung hergestellt. Vielmehr muss der Fahrer die Ankündigung der künftigen Verkehrsregel in der realen Umwelt wahrnehmen und innerhalb des Straßenabschnitts die Anzeige der geltenden Verkehrsregel im Head-Up-Display (sofern vorgesehen) verwenden. Hingegen erlauben augmentierte Head-Up-Displays durch die Verdeutlichung bzw. Augmentierung der in der Umwelt befindlichen Gegenstände, dass der Fahrer einfach einen Bezug zwischen der Umwelt und dem angezeigten, adäquaten Fahrverhalten herstellen kann. Beispielsweise zeigen auf der Fahrbahn liegende Navigationspfeile direkt in die Richtung, in welche der Fahrer einbiegen soll. Augmentierungen dieser Art setzen allerdings Sichtfelder voraus, die rechts und links optisch weit über die eigene Fahrspur hinausgehen. Die in der Umgebung verortete Augmentierung durch Head-Up-Displays wird auch als "kontaktanaloge Einblendung/Anzeige" bezeichnet. Es ist eine Aufgabe der vorliegenden Erfindung, eine Unterstützung eines Fahrers eines Fortbewegungsmittels hinsichtlich in vorausliegenden Straßenabschnitten bestehender Verkehrsregeln zu ermöglichen. Insbesondere sollen innerhalb der stark eingeschränkten Flächenbereiche eines Head-Up-Displays mögliche Anzeigen einen maximalen Mehrwert generieren.

Die vorstehend identifizierte Aufgabe wird erfindungsgemäß durch ein Verfahren zur Information eines Anwenders eines Fortbewegungsmittels gelöst. Der Anwender kann beispielsweise der Fahrer, der Beifahrer oder ein Fondpassagier des Fortbewegungsmittels sein. Das Fortbewegungsmittel kann als Pkw, Transporter, LKW, Motorrad, Luft- und/oder Wasserfahrzeug ausgestaltet sein. In einem ersten Schritt wird ein Einfahren des Fortbewegungsmittels in einen Bereich mit einer vorgeschriebenen Verkehrsregelung ermittelt. Die Verkehrsregelung kann beispielsweise ein Gebot zur Führung des Fortbewegungsmittels in einer vorgeschriebenen Art und Weise repräsentieren. Mit anderen Worten wird der Eintritt des Fortbewegungsmittels in einen Geltungsbereich der Verkehrsregelung sensorisch/automatisch erkannt. Anschließend oder im Ansprechen darauf wird ein bezüglich der Straßenoberfläche kontaktanaloger Hinweis auf die Verkehrsregelung an den Anwender ausgegeben. Hierbei wird eine Anzeigeeinrichtung des Fortbewegungsmittels verwendet. Die Anzeigeeinrichtung kann beispielsweise ein Head-Up-Display umfassen. Zur Erzeugung eines kontaktanalogen Hinweises kann die Position des Anwenders, insbesondere seine Augen-/Kopfposition sensorisch ermittelt werden. Auch wenn eine kontaktanaloge Gestalt des Hinweises vorgeschlagen wird, kann der Hinweis in Abhängigkeit seiner virtuellen Position bzw. Entfernung zum Fortbewegungsmittel stets eine solche Größe aufweisen, dass er vom Anwender rechtzeitig erfasst und interpretiert werden kann. Je weiter der Hinweis virtuell vom Fortbewegungsmittel verortet ist, desto größer kann seine Gestalt sein. Hierdurch wird eine frühzeitige Augmentierung der Umgebung des Fortbewegungsmittels vor dem Eintritt in die Verkehrszone möglich und die Verkehrsregel kann rechtzeitig erkannt werden. Auf diese Weise kann eine rechtzeitige Anpassung des Führungsverhaltens bezüglich des Fortbewegungsmittels erfolgen. Die vorliegende Erfindung ermöglicht eine besonders intuitiv verständliche und dennoch dezente Möglichkeit zur Information des Anwenders über die Verkehrsregelung.

Die Unteransprüche zeigen bevorzugte Weiterbildungen der Erfindung.

Die Verkehrsregelung kann sich auf eine vorgeschriebene Höchstgeschwindigkeit, ein Überholverbot, eine Vorfahrtsregelung, eine Einbahnstraße, eine Aufhebung von Verkehrsbeschränkungen, eine Gefahrenstelle, eine Staugefahr, eine Baustelle oder eine Streckenlänge, für welche die vorgenannten Verkehrsregelungen gelten, beziehen. Insbesondere für den Fall, dass die Streckenlänge des Geltungsbereiches bei Eintritt in den Bereich mit der vorgeschriebenen Verkehrsregelung bekannt ist bzw. bekannt gegeben wird, kann der Hinweis in Abhängigkeit einer bereits im Bereich der vorgeschriebenen Verkehrsregelung zurückgelegten Strecke derart (kontinuierlich oder in vordefinierten Schritten) verändert/ergänzt werden, dass die jeweils verbleibende Streckenlänge des Geltungsbereiches (z.B. durch einen entsprechenden dynamisch verringerten Zahlenwert (Angabe verbleibender Streckenlänge bis zum Verlassen des Geltungsbereiches), und/oder ein Balkendiagram o.ä.) angezeigt wird. Die jeweils verbleibende Streckenlänge kann beispielsweise kontaktanalog (also "virtuell ortsfest") zum Fortbewegungsmittel angezeigt werden. Alternativ oder zusätzlich kann die Anzeige der verbleibenden Streckenlänge (z.B. in vordefinierten Abständen aktualisiert und) kontaktanalog zum Straßenbelag angezeigt werden. Die Angaben werde also virtuell -wie Fahrbahnbeschriftungen- vom Fortbewegungsmittel überfahren. Hierbei kann die Angabe zur verbleibenden Streckenlänge dem erfindungsgemäßen Hinweis optisch zugeordnet sein. So sind auch die zu den jeweiligen Streckenlängenangaben gehörigen Positionen intuitiv für den Anwender erkennbar. Unabhängig vom für die Kontaktanalogie gewählten Bezugssystem kann die Anzeige im Headup-Display und/oder auf einer anderen Anzeigeeinrichtung des Fortbewegungsmittels erfolgen. Auf diese Weise wird der Anwender bestmöglich bei der Einhaltung der aktuell von seinem Fortbewegungsmittel durchfahrenen Geltungsbereiche unterstützt.

Der Hinweis kann beispielsweise als virtuell auf einen vor dem Fortbewegungsmittel liegenden Fahrbahnbelag aufgebrachter optischer Hinweise ausgestaltet sein. Mit anderen Worten kann er einer Markierung auf dem Fahrbahnbelag nachempfunden sein und eine entsprechende Ausrichtung/Verzerrung gegenüber herkömmlichen Anzeigeinhalten eines Head-Up-Displays aufweisen. In diesem Zusammenhang kann auch ein Verkehrsteilnehmer auf der vor dem Fortbewegungsmittel befindlichen Fahrbahn erkannt werden und zur Vermeidung einer Überdeckung des Verkehrsteilnehmers durch den Hinweis der Verkehrsteilnehmer zumindest im Bereich des Verkehrsteilnehmers unterdrückt werden. Somit ergibt sich für den Anwender eine intuitiv verständliche Positionierung, Gestalt und Erfassbarkeit des Hinweises. Die Dauer bis zur erfolgreichen Erfassung/Interpretation des Hinweises wird bestmöglich verringert und die Position, ab welcher die im Hinweis angekündigte Verkehrsregelung gilt, kann durch die Position des Hinweises auf dem Fahrbahnbelag gekennzeichnet werden.

Insbesondere für den Fall, dass der mit dem erfindungsgemäßen Hinweis eingeleitete Verkehrsbereich die Verkehrsregelung nicht ohnehin erkennen lässt, kann nach dem Einfahren in den Bereich mit der vorgeschriebenen Verkehrsregelung der hinsichtlich der Fahrzeugumgebung kontaktanaloge Hinweis in einen bezüglich des Fortbewegungsmittels (herkömmlichen) kontaktanalogen Hinweis umgewandelt werden. Beispielsweise kann eine Form-/Positionsveränderung des Hinweises in einen vordefinierten Bereich der Anzeigefläche des Head-Up-Displays erfolgen, wodurch der Anwender intuitiv darauf aufmerksam gemacht wird, an welcher Stelle sich der Hinweis auf die Verkehrsregelung zukünftig befindet. Auf diese Weise ist nicht nur die Position eines Geltungsbeginns der Verkehrsregelung sichergestellt, sondern auch eine fortwährende Ablesbarkeit des Hinweises innerhalb des Bereiches, in welchem die Verkehrsregelung gilt.

Die vorstehend beschriebene Umwandlung des bezüglich der Straßenoberfläche kontaktanalogen Hinweises in einen bezüglich des Fortbewegungsmittels kontaktanalogen Hinweises kann voraussetzen, dass die dem Hinweis zugrundeliegende Verkehrsregelung einer vordefinierten Klasse von Verkehrsregelungen zugehört. Diese Eigenschaft kann nach einer Erkennung der Verkehrsregelung beispielsweise innerhalb des Fortbewegungsmittels erfolgen. Beispielsweise kann die Klasse für solche Verkehrsregelungen vorgesehen sein, deren Ursache während ihrer Geltungsdauer für den Anwender des Fortbewegungsmittels nicht dauerhaft ersichtlich ist. Beispiele hierfür sind eine zulässige Höchstgeschwindigkeit, eine Vorfahrtsregelung oder das Ende aller Streckenverbote. Im Gegensatz hierzu kann eine Baustelle, welche mittels eines entsprechenden Hinweises angekündigt wird, auch während des Geltungsbereiches der Verkehrsregelung (nämlich anhand einer tatsächlich vorhandenen Baustelle(-n) Begrenzung) vom Anwender erkannt werden. Somit wird die vom Head-Up-Display bzw. der verwendeten Anzeigeeinrichtung bereitgestellte Anzeigefläche nur für die Darstellung solcher Hinweise verwendet, welche derzeit einen signifikanten Mehrwert für den Anwender aufweisen.

Bevor der erfindungsgemäß vorgeschlagene kontaktanaloge Hinweis auf die Verkehrsregelung ausgegeben wird, kann automatisch ermittelt werden, dass die Führung/Bewegung des Fortbewegungsmittels von der Verkehrsregelung abweicht. Beispielsweise kann das Überschreiten einer durch die Verkehrsregelung definierten Maximalgeschwindigkeit um einen vordefinierten Betrag sensorisch ermittelt werden. Erst im Ansprechen auf die Abweichung (insbesondere, um einen vordefinierten Mindestbetrag) wird dann der erfindungsgemäß vorgeschlagene kontaktanaloge Hinweis auf die Verkehrsregelung angezeigt.

Der Beginn des Geltungsbereiches der Verkehrsregelung kann beispielsweise durch einen lokalen Datenspeicher des Fortbewegungsmittels erkannt werden. Hierzu kann das Fortbewegungsmittel eine Ortung seiner eigenen Position durchführen und aus dem Datenspeicher die Position des Beginns des Geltungsbereiches ermittelt werden. Alternativ oder zusätzlich können Umgebungssensoren (z. B. Frontkameras) verwendet werden, um Straßenschilder automatisch zu erkennen oder Fahrbahnmarkierungen zu interpretieren.

Gemäß einem zweiten Aspekt der vorliegenden Erfindung wird ein Fahrerassistenzsystem vorgeschlagen, welches der Information eines Anwenders eines Fortbewegungsmittels (z. B. der Fahrer, ein Beifahrer oder ein Fondpassagier des Fortbewegungsmittels) dient. Das Fahrerassistenzsystem weist einen Dateneingang (z. B. ein Busteilnehmer, ein Sensoreingang, eine Antenne o. ä.), eine Auswerteeinheit (z. B. ein programmierbarer Prozessor, ein Mikroprozessor, ein elektronisches Steuergerät o. ä.) und einen Datenausgang (z. B. ein Busteilnehmer, eine Anzeigeeinrichtung o. ä.) auf. Insbesondere kann der Datenausgang mit einem Head-Up-Display informationstechnisch verbunden werden. Die Auswerteeinheit ist eingerichtet, mittels des Dateneingangs eine Einfahrt in einen Bereich mit einer Verkehrsregelung zu ermitteln. Mittels des Datenausgangs kann die Auswerteeinheit einen bezüglich der Straßenoberfläche kontaktanalogen Hinweis auf die Verkehrsregelung an den Anwender ausgeben. Hierzu kann eine Anzeigeeinrichtung (z. B. ein Head-Up-Display) des Fortbewegungsmittels verwendet werden. Insbesondere kann die Auswerteeinheit in Verbindung mit dem Dateneingang zur exakten Positionierung des kontaktanalogen Hinweises in der Umgebung des Fortbewegungsmittels eine Augenposition und/oder eine Kopfposition des Anwenders ermitteln. Auf diese Weise ist das erfindungsgemäße Fahrerassistenzsystem eingerichtet, die Merkmale, Merkmalskombinationen und die sich aus diesen ergebenden Vorteile derart ersichtlich entsprechend derjenigen des erfindungsgemäßen Verfahrens zu verwirklichen, dass zur Vermeidung von Wiederholungen auf die obigen Ausführungen verwiesen wird.

Gemäß einem dritten Aspekt der vorliegenden Erfindung wird ein Computerprogrammprodukt vorgeschlagen, welches Instruktionen aufweist, welche, wenn sie auf einer Auswerteeinheit eines erfindungsgemäßen Fahrerassistenzsystems ausgeführt werden, die Auswerteeinheit in die Lage versetzen, die Schritte eines Verfahrens gemäß dem erstgenannten Erfindungsaspekt durchzuführen. Das Computerprogrammprodukt kann als CD, DVD, Blue-Ray-Disc, Flash-Speicher, Festplatte, RAM/ROM, Cash, etc. ausgestaltet sein.

Gemäß einem vierten Aspekt der vorliegenden Erfindung wird eine Signalfolge repräsentierend Instruktionen vorgeschlagen, welche, wenn sie auf einer Auswerteeinheit eines erfindungsgemäßen Fahrerassistenzsystems ausgeführt werden, selbige in die Lage versetzen, die Schritte eines Verfahrens gemäß dem erstgenannten Erfindungsaspekt durchzuführen. Auf diese Weise wird auch die informationstechnische Bereitstellung der Instruktionen für den Fall unter Schutz gestellt, dass sich die hierzu erforderlichen Speichermittel außerhalb des Geltungsbereiches der beigefügten Ansprüche befinden.

Die vorliegende Erfindung beschreibt in einem Aspekt die Augmentierung von Verkehrszeichen mit einem Head-Up-Display, dessen Sichtfeld bei einer Projektionsdistanz von ungefähr 7,5 m bei 1,3 m Breite liegt und damit innerhalb der eigenen Fahrspur des erfindungsgemäß ausgestalteten Fortbewegungsmittels. Eine Augmentierung eines Verkehrszeichens in der Umgebung ist daher nicht möglich. Eine Idee der vorliegenden Erfindung besteht darin, den Beginn des Straßenabschnitts dadurch zu augmentieren, dass das Verkehrszeichen auf die Straßenoberfläche gelegt wird. Die Regelung für den neuen Straßenabschnitt ist daher vom Fahrer bereits beim Annähern an diesen kontinuierlich sichtbar. Die Darstellung kann als Verkehrszeichen erfolgen oder auf wesentliche Inhalte (z. B. die Geschwindigkeit) beschränkt sein. Der Beginn der Augmentierung kann geschwindigkeitsabhängig gewählt werden, da bei höherer Geschwindigkeit ein schnelleres Erreichen des betreffenden Straßenabschnitts erfolgt und daher eine frühere Anzeige wünschenswert ist. Bei höherer Geschwindigkeit wird somit die Vorwarnzeit für den Anwender im Wesentlichen beibehalten, indem der Hinweis bereits in einer größeren virtuellen Entfernung vom Fortbewegungsmittel eingeblendet wird, als dies bei geringeren Fahrgeschwindigkeiten der Fall ist. Auch die Größe des Hinweises kann dabei stets so gewählt werden, dass die Anzeige unabhängig von ihrer Entfernung gut durch den Fahrer wahrnehmbar ist. Dieses Verhalten steht in diametralem Unterschied zu realen Verkehrszeichen und ihrer über der Entfernung veränderlichen optischen Signatur für den Anwender. Nach dem Passieren des Straßenabschnittbeginns kann das Verkehrszeichen als statische Anzeige in der Anzeigeeinheit eingeblendet werden und erinnert dadurch dauerhaft an die aktuell gültige Verkehrsregelung. Erst im Ansprechen auf das Verlassen des Bereiches und/oder im Ansprechen auf das Einfahren in einen Bereich mit einer anderen Verkehrsregelung kann die statische Anzeige ausgeblendet und/oder aktualisiert werden.

Nachfolgend wird die vorliegende Erfindung anhand von Ausführungsbeispielen sowie anhand der beigefügten Zeichnungsfiguren im Detail beschrieben. Es zeigen:
- Figur 1: eine schematische Darstellung eines Ausführungsbeispiels eines erfindungsgemäßen Fortbewegungsmittels mit einem Ausführungsbeispiel eines erfindungsgemäßen Fahrerassistenzsystems bei der Ausführung eines erfindungsgemäßen Verfahrens;
- Figur 2 bis 5: schematische Ansichten einer Fahrzeugumgebung, welche durch ein Head-Up-Display augmentiert werden;
- Figur 6: Verkehrszeichen zur Anzeige von Verkehrsregelungen einer ersten Klasse;
- Figur 7: Verkehrszeichen zur Anzeige von Verkehrsregelungen einer zweiten Klasse; und
- Figur 8: ein Flussdiagramm veranschaulichend Schritte eines Ausführungsbeispiels eines erfindungsgemäßen Verfahrens.

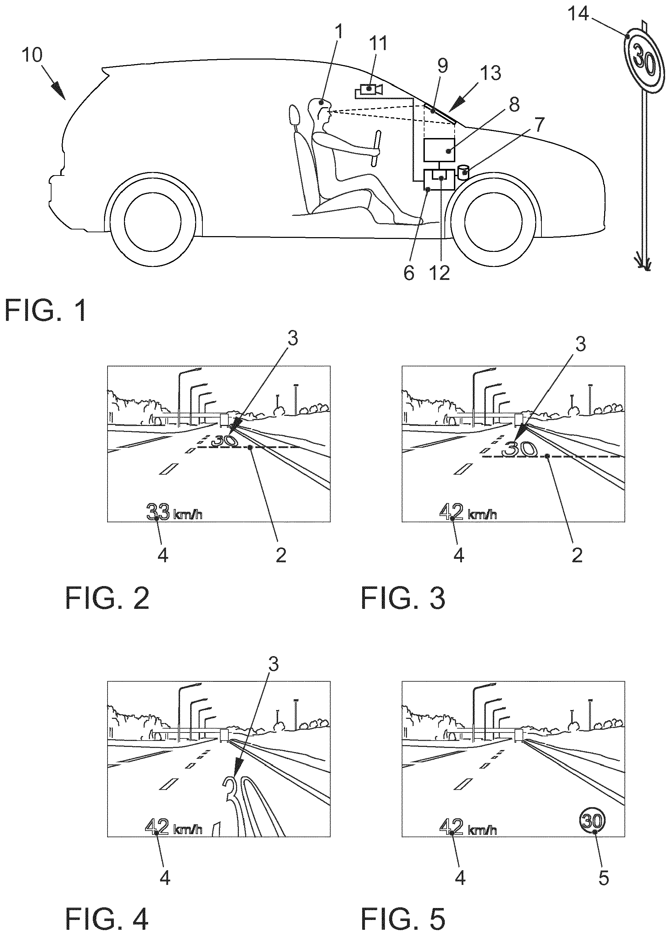

Figur 1 zeigt einen Pkw 10 als Ausführungsbeispiel eines erfindungsgemäßen Fortbewegungsmittels, in welchem ein Anwender in einen auf 30 km/h beschränkten Bereich einfährt. Die Geschwindigkeitsbeschränkung wird durch ein Verkehrsschild 14 angekündigt, welches mittels einer Frontkamera 11 als Dateneingang an ein elektronisches Steuergerät 6 als Auswerteeinheit gemeldet wird. Ein Datenspeicher 7 ist informationstechnisch mit dem elektronischen Steuergerät 6 verbunden und hält Instruktionen zur Ausführung eines erfindungsgemäßen Verfahrens sowie Referenzen zur Erkennung der Verkehrsschilder und Ermittlung ihrer Klassen bereit. Über einen Datenausgang 12 ist das elektronische Steuergerät 6 eingerichtet, einen Projektor 8 eines Head-Up-Displays 13 zu verwenden, um durch eine semitransparente Schicht 9 in der Windschutzscheibe einen bezüglich der Umgebung kontaktanalogen Hinweis auf die Geschwindigkeitsbeschränkung auszugeben.

Figur 2 zeigt eine Ansicht auf die Umgebung des in Figur 1 dargestellten Fortbewegungsmittels aus Sicht des Fahrers. Durch eine gestrichelte Linie 2 wird der Beginn eines Bereiches mit einer zulässigen Höchstgeschwindigkeit von 30 km/h gekennzeichnet. Im Bereich der gestrichelten Linie 2 ist die Zahl 30 als kontaktanaloger Hinweis 3 derart auf der Fahrbahnoberfläche verortet und verzerrt, dass er ähnlich einer auf die Fahrbahn gemalten Geschwindigkeitsbeschränkung erscheint. Eine bezüglich des Fortbewegungsmittels kontaktanaloge Anzeige 4 einer aktuellen Reisegeschwindigkeit (33 km/h) lässt erkennen, dass der Fahrer die vorausliegend geltende Höchstgeschwindigkeit von 30 km/h überschreitet und eine Anzeige des kontaktanalogen Hinweises 3 daher sinnvoll ist.

Figur 3 zeigt eine zeitlich auf die in Figur 2 gezeigte Fahrsituation folgende Fahrsituation, welche sich durch Annäherung an den Beginn (gestrichelte Linie 2) des Bereiches mit einer zulässigen Höchstgeschwindigkeit von 30 km/h ergibt. Der kontaktanaloge Hinweis 3 ist dem Fahrer näher gerückt und vergrößert dargestellt. Die Ausrichtung ("virtuelle Perspektive") auf den kontaktanalogen Hinweis 3 ist jedoch im Wesentlichen unverändert. Der bezüglich des Fortbewegungsmittels kontaktanaloge Hinweis 4 auf die aktuelle Reisegeschwindigkeit (42 km/h) spricht dafür, die Anzeige des bezüglich der Umgebung kontaktanalogen Hinweises 3 fortzusetzen.

Figur 4 zeigt die Ansicht auf die Umgebung des Fortbewegungsmittels aus der Perspektive des Fahrers beim Überfahren der gestrichelten Linie 2. Der kontaktanaloge Hinweis 3 wird in seiner maximalen Größe dargestellt und unmittelbar nachfolgend "virtuell" vom Fortbewegungsmittel überfahren.

Figur 5 zeigt die Perspektive des Fahrers auf die Umgebung des Fortbewegungsmittels nach einem Einfahren in den Bereich mit der zulässigen Höchstgeschwindigkeit von 30 km/h. Da die zulässige Höchstgeschwindigkeit einer Klasse von Verkehrsregelungen zugehört, deren Natur nicht unmittelbar aus der Erscheinung ihres Geltungsbereiches hervorgeht, wird ein zusätzlicher, bezüglich des Fortbewegungsmittels kontaktanaloger Hinweis 5 auf die fortwährend geltende zulässige Höchstgeschwindigkeit (30 km/h) im Head-Up-Display eingeblendet.

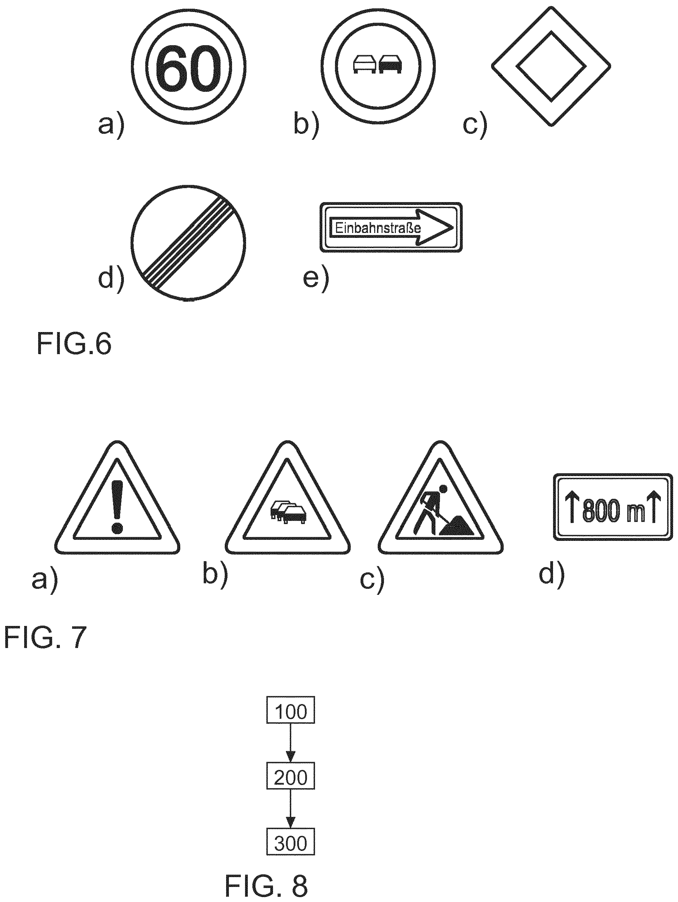

Figur 6 zeigt Beispiele für Verkehrszeichen, welche Verkehrsregelungen einer ersten Klasse symbolisieren. Im Geltungsbereich einer zulässigen Höchstgeschwindigkeit von 60 km/h (Schild a), eines Überholverbotes (Schild b), einer Vorfahrtsstraße (Schild c) sowie eines Endes aller Streckenverbote (Schild d) und einer Einbahnstraße (Schild e) sind Merkmale, welche an das Verkehrsschild erinnern, nicht unmittelbar ersichtlich. Entsprechend wird vorgeschlagen, nach dem Einfahren in den Geltungsbereich der dargestellten Schilder und nach der Ausgabe des bezüglich der Umgebung kontaktanalogen Hinweises alternativ oder zusätzlich einen bezüglich des Fortbewegungsmittels kontaktanalogen Hinweis im Head-Up-Display eines erfindungsgemäßen Fortbewegungsmittels auszugeben, bis ihr Geltungsbereich wieder verlassen wird.

Figur 7 zeigt Beispiele für Verkehrsschilder, durch welche Verkehrsregelungen einer zweiten Klasse veranschaulicht werden. Üblicherweise ist im Bereich einer Gefahrenstelle (Schild a), eines Verkehrsstaus (Schild b) oder einer Baustelle (Schild c) der jeweilige Umstand stets für den Anwender ersichtlich. Eine fortwährende Anzeige eines entsprechenden bezüglich des Fortbewegungsmittels kontaktanalogen Hinweises ist daher üblicherweise nicht notwendig. Sofern die vorgenannten Verkehrsschilder durch eine Streckenlänge ihrer Geltung (Schild d) ergänzt werden, kann der bezüglich des Fortbewegungsmittels kontaktanaloge Hinweis auch derart dynamisch wiedergegeben werden, dass die verbleibende Streckenlänge des jeweiligen Geltungsbereiches in vordefinierten Schritten durch den Hinweis wiedergegeben wird.

Figur 8 zeigt ein Flussdiagramm veranschaulichend Schritte eines Ausführungsbeispiels eines erfindungsgemäßen Verfahrens. In Schritt 100 wird ein Einfahren in einen Bereich mit einer vorgeschriebenen Verkehrsregelung ermittelt. Mit anderen Worten wird für den vorausliegenden Streckenabschnitt eine Verkehrsregelung ermittelt, welche sich von dem bisher befahrenen Bereich unterscheidet. In Schritt 200 wird zudem ermittelt, dass das aktuelle Führungsverhalten des Fahrzeugführers bzw. der Fahrzustand des Fortbewegungsmittels von der Verkehrsregelung in vordefinierter Weise abweicht. In Schritt 300 wird daher ein bezüglich der Straßenoberfläche kontaktanaloger Hinweis auf die Verkehrsregelung an den Anwender mittels einer Anzeigeeinrichtung des Fortbewegungsmittels ausgegeben, um den Anwender darüber zu informieren, dass er nicht normgerecht unterwegs ist.

### Bezugszeichenliste

- 1: Anwender
- 2: gestrichelte Linie
- 3: Bezüglich der Straßenoberfläche kontaktanaloger Hinweis
- 4: Hinweis über die Reisegeschwindigkeit
- 5: Hinweis auf die geltende zulässige Höchstgeschwindigkeit
- 6: Elektronisches Steuergerät
- 7: Datenspeicher
- 8: Projektor
- 9: semitransparente Schicht
- 10: Pkw
- 11: Frontkamera
- 12: Datenausgang
- 13: Head-Up-Display
- 14: Verkehrsschild
- 100 bis 300: Verfahrensschritte

## Patentansprüche

1. Verfahren zur Information eines Anwenders (1) eines Fortbewegungsmittels (10) umfassend die Schritte:
- Ermitteln (100) eines Einfahrens in einen Bereich mit einer vorgeschriebenen Verkehrsregelung und
- Ausgeben (300) eines bezüglich der Straßenoberfläche kontaktanalogen Hinweises (3) auf die Verkehrsregelung an den Anwender (1) mittels einer Anzeigeeinrichtung (8, 9) des Fortbewegungsmittels (10).

2. Verfahren nach Anspruch 1, wobei die Anzeigeeinrichtung (8, 9) ein Head-up Display umfasst.

3. Verfahren nach Anspruch 1, wobei die Verkehrsregelung
- eine Höchstgeschwindigkeit und/oder
- ein Überholverbot und/oder
- eine Vorfahrtsregelung und/oder
- eine Aufhebung von Verkehrsbeschränkungen und/oder
- eine Einbahnstraße und/oder
- eine Gefahrenstelle und/oder
- einen Stau und/oder
- eine Baustelle und/oder
- eine Streckenlänge, für welche die Verkehrsregelung gilt,
umfasst.

4. Verfahren nach einem der vorstehenden Ansprüche, wobei der Hinweis (3) als virtuell auf einen vor dem Fortbewegungsmittel (10) vorausliegenden Fahrbahnbelag aufgebrachter optischer Hinweis ausgestaltet ist.

5. Verfahren nach einem der vorstehenden Ansprüche weiter umfassend
- Ersetzen des bezüglich der Straßenoberfläche kontaktanalogen Hinweises (3) durch einen bezüglich des Fortbewegungsmittels (10) kontaktanalogen Hinweis.

6. Verfahren nach Anspruch 5, wobei das Ersetzen des bezüglich der Straßenoberfläche kontaktanalogen Hinweises (3) im Ansprechen auf ein Ermitteln einer Zugehörigkeit der Verkehrsregelung zu einer vordefinierten Klasse erfolgt.

7. Verfahren nach einem der vorstehenden Ansprüche weiter umfassend
- Ermitteln (200) einer von der Verkehrsregelung abweichenden Führung des Fortbewegungsmittels (10).

8. Verfahren nach einem der vorstehenden Ansprüche, wobei das Ermitteln des Einfahrens unter Verwendung
- eines lokalen Datenspeichers (7) des Fortbewegungsmittels (10) und/oder
- eines Umgebungssensors (11)
erfolgt.

9. Fahrerassistenzsystem zur Information eines Anwenders (1) eines Fortbewegungsmittels (10) umfassend
- einen Dateneingang (11),
- eine Auswerteeinheit (8) und
- einen Datenausgang (12), wobei
- die Auswerteeinheit (8) eingerichtet ist,
- mittels des Dateneingangs (11) eine Einfahrt in einen Bereich mit einer Verkehrsregelung zu ermitteln und
- mittels des Datenausgangs (12) einen bezüglich der Straßenoberfläche kontaktanalogen Hinweis (3) auf die Verkehrsregelung an den Anwender (1) mittels einer Anzeigeeinrichtung (8, 9) des Fortbewegungsmittels (10) auszugeben.

10. Fahrerassistenzsystem nach Anspruch 9, welches eingerichtet ist, ein Verfahren nach einem der vorstehenden Ansprüche 1 bis 8 auszuführen.

11. Computerprogrammprodukt umfassend Instruktionen, welche, wenn Sie auf einem programmierbaren Prozessor (8) eines Fahrerassistenzsystems (13) nach einem der Ansprüche 9 oder 10 ausgeführt werden, den Prozessor (8) veranlassen, die Schritte eines Verfahrens nach einem der Ansprüche 1 bis 8 durchzuführen.

12. Signalfolge repräsentierend Instruktionen, welche, wenn Sie auf einem programmierbaren Prozessor (8) eines Fahrerassistenzsystems (13) nach einem der Ansprüche 9 oder 10 ausgeführt werden, den Prozessor (8) veranlassen, die Schritte eines Verfahrens nach einem der Ansprüche 1 bis 8 durchzuführen.

13. Fortbewegungsmittel umfassend ein Fahrerassistenzsystem (13) nach einem der vorstehenden Ansprüche 9 oder 10.
